# EUROPEAN PATENT APPLICATION

(11) **EP 4 201 172 A1**
(43) Date of publication of application: **28.06.2023**
(21) Application number: 21217276.1
(22) Date of filing: 23.12.2021
(51) Int. Cl.: A01B 63/14, A01B 3/46, A01B 63/00, A01B 63/22, A01B 79/02

(54) **AGRICULTURAL PLOUGH AND METHOD FOR OPERATING**

(71) Applicant: CNH Industrial Sweden AB, 590 96 Överum (SE)
(72) Inventor: Hertzog, Daniel, 59376 Blackstad (SE)
(74) Representative: CNH Industrial IP Department

(57) **Abstract**

A plough comprising: a ground engaging tool and a thermal camera that is configured to acquire thermal images of soil as it is being turned over by the ground engaging tool. The plough further comprising a controller that is configured to set one or more operational characteristics of the plough based on the acquired thermal images.

## Description

### Background of the Invention

The present disclosure relates to an agricultural plough, particularly, but not exclusively, to a plough comprising a plough implement. Other aspects of the present disclosure relate to a method for operating an agricultural plough.

In agriculture, farming cycles are followed that can roughly be divided into the different steps of land preparation, seed sowing, fertilizing, irrigation, crop growth, and harvesting. Each of these steps is critical to yield optimal crop results and achieve the desired returns on initial investments. Of the listed steps, land preparation is typically further divided into steps of, as necessary, clearing obstructions (e.g. bushes, stones and rocks) and subsequent tillage.

Tilling crumbles and loosens the soil, improves the soil structure and incorporates crop residues and manure into the soil, thus fertilizing the ground. The improved soil structure allows for increased plant root growth, soil aeration and water penetration/filtration. Overall this results in higher yields, better long-term soil fertility, soil moisture retention, and weed management. Tillage can be separated into primary (relatively deep) and secondary (relatively shallow) tillage. In primary tillage, such as ploughing, the soil is turned over such that nutrients come to the surface. In addition to turning up the soil to bring fresh nutrients to the top and depositing plant residue below where it will break down, this process also aerates the earth - enabling it to hold more moisture. Preparing the land to a greater depth produces a rougher surface finish than secondary tillage. Secondary tillage (e.g. seedbed cultivation) breaks up soil clods into smaller masses which might be desirable for small seeds or plants that have minimal clod-handling ability.

Primary tillage, and particularly ploughing, is widely regarded as one of the most effective ways of preventing crop disease, removing weeds, and controlling mice and other pests. In its simplest form the turnplough, also known as the mouldboard plough, includes a variety of plough bodies, which are blades for penetrating and turning over the soil in arrays of adjacent trenches, known as furrows. Modern ploughs typically include a plurality of plough bodies connected to a plough frame such that they are laterally offset from each other when the plough is in use. Each plough body is connected to the plough frame via corresponding beams. The plough frame, in turn, is connected to a towing or pushing vehicle via a hitch arranged at a front or back end of the frame.

Depending on the density of the soil, a working depth of the plough bodies can be adjusted. For instance, the plough bodies working depth may be shallow in harder (dense) soils, whereas a deeper working depth may be applied in softer (less dense) soils. The plough bodies can be rigidly attached to the main frame, such that their distance from the main frame remains constant. Accordingly, the working depth of the ploughs are then adjusted by varying the ground clearance of the main frame. If the main frame is brought closer to the ground surface, the ground clearance is reduced, and the plough bodies penetrate deeper into the soil. Similarly, if the main frame is lifted further off the ground, the ground clearance is increased, and the plough bodies are raised, thereby reducing the working depth.

The ground clearance of the main frame may, for example, be controlled by one or more depth wheels. The one or more depth wheels may be connected to any part of the main frame such as the rear end of the main frame. An adjustable linkage may be provided between the main frame and the depth wheel to allow for changes in the distance between the depth wheel and the main frame. During ploughing, the depth wheel runs on the ground surface and supports the weight of the plough. If the distance between the depth wheel and the main frame is reduced, then the ground clearance between the main frame and the ground surface reduces accordingly. On the other hand, if the distance between the depth wheel and the main frame is increased, the ground clearance of the main frame increases. As outlined before, changing the main frame's ground clearance results in a variation of the ploughing depth.

Another factor in correctly setting up agricultural ploughs is a lateral adjustment of the plough bodies of the plough implement with respect to the work vehicle, i.e. in a direction perpendicular to the direction of travel. One way of laterally adjusting the plough bodies is by shifting a main frame of the plough implement with respect to the headstock. This may be used to adjust the lateral position of the first plough body of the plough implement to create homogenously aligned furrows.

Lateral adjustment of the plough implement and thus the plough bodies can also be used to change the ploughing width of the plough bodies and the resulting furrow width. To this end, the main frame of a plough implement may be pivoted with respect to the headstock in a horizontal plane (if the ground surface is horizontal) to change an angle of the main frame with respect to the agricultural work vehicle. When pivoting the main frame, the plough bodies are moved simultaneously in a lateral direction and a longitudinal direction with respect to the agricultural vehicle. Pivoting the main frame with respect to the work vehicle will change a lateral extent of the plough implement (e.g. the plough bodies). A lateral adjustment by pivoting thus has an impact on the ploughing width of the plough implement. It follows that the pivoting adjustment may have an impact on energy consumption and/or wear of the plough may be affected.

### Summary of the Invention

According to a first aspect of the present disclosure, there is provided a plough comprising:
a ground engaging tool;
a thermal camera that is configured to acquire thermal images of soil as it is being turned over by the ground engaging tool; and
a controller that is configured to set one or more operational characteristics of the plough based on the acquired thermal images.

Setting one or more operational characteristics of the plough in this way can result in improved ploughing operations that can be controlled such that they take into account information in the acquired thermal images.

The ground engaging tool may comprise a plough body or a skimmer.

The controller may be configured to: determine a furrow depth based on the acquired thermal images; and set the one or more operational characteristics of the plough based on the determined furrow depth.

The controller may be configured to: receive environmental-data that is indicative of the environmental conditions in which the plough is operating; and determine the furrow depth based on the acquired thermal images and also the environmental-data.

The controller may be configured to apply a machine learning algorithm to the acquired thermal images in order to determine the furrow depth.

The controller may be configured to: determine a residue coverage that is achieved by the ploughing operation based on the acquired thermal images; and set the one or more operational characteristics of the plough based on the determined residue coverage.

The controller may be configured to: determine a temperature differential across the thickness of a layer of soil as it is being turned over by the ground engaging tool from the acquired thermal images; and set the one or more operational characteristics of the plough based on the determined temperature differential.

The controller may be configured to: determine a furrow depth based on the determined temperature differential; and set one or more operational characteristics of the plough based on the determined furrow depth.

The controller may be configured to determine the furrow depth based on the determined temperature differential and also a temperature of the soil surface.

The controller may be configured to: determine a temperature of an exposed surface of a layer of soil as it is being turned over by the ground engaging tool; and set the one or more operational characteristics of the plough based on the determined temperature of the exposed surface.

The controller may be configured to: determine a furrow depth based on the determined temperature of the exposed surface; and set one or more operational characteristics of the plough based on the determined furrow depth.

The exposed surface may be a bottom surface of the layer of soil that represents the deepest part of the layer of soil before it was turned over. The exposed surface may be a side surface of the layer.

The controller may be configured to set one or more of the following operational characteristics of the plough:
a working depth of the ground engaging tool;
a furrow width;
a first furrow width;
a speed of the plough; and
an angle of the ground engaging tool.

The controller may be configured to: receive a subsequent-operation-signal that represents information about a subsequent operation that is to be performed on the soil; and set the one or more operational characteristics of the plough also based on the received subsequent-operation-signal.

The subsequent-operation-signal may represent one or more of the following:
a seeding operation, and optionally the type of seeds that will be sown;
a harrowing operation;
a period of time until the subsequent operation; and
the time of year that the subsequent operation will be performed.

The controller may be configured to: receive environmental-data that is indicative of the environmental conditions in which the plough is operating; and set the one or more operational characteristics of the plough also based on the received environmental-data.

The environmental-data may be indicative one or more of:
air humidity;
air temperature;
soil temperature;
soil type;
soil compaction; and
time of year.

There is also provided a computer-implemented method of controlling a plough, the method comprising:
acquiring thermal images of soil as it is being turned over by a ground engaging tool of the plough; and
setting one or more operational characteristics of the plough based on the acquired thermal images.

In yet another aspect of the present disclosure, there is provided a computer program configured to perform the any method disclosed herein or to configure any controller disclosed herein. When run on a computer, the computer program causes the computer to configure any apparatus, including the controller, disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium, which may be a physical computer readable medium such as a disc or a memory device, or may be embodied as a transient signal. Such a transient signal may be a network download, including an internet download.

The agricultural work vehicle and/or the agricultural implement may be remote controlled, e.g. from a farm office. Accordingly, the agricultural work vehicle may include one or more communication interfaces for connection to a remote processor and/or a remote controller. Similarly, the agricultural implement may include one or more communication interfaces for connection to a remote processor and/or a remote controller.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### Brief Description of the Drawings

One or more embodiments of the present disclosure will now be described by way of example only, with reference to the accompanying drawings, in which:
Figure 1A shows a right-side view of an agricultural implement with fixed ground engaging tools;
Figure 1B shows a left-side view of the agricultural implement shown in Figure 1A;
Figure 1C shows a plan view of the agricultural implement shown in Figure 1A;
Figure 2 shows a schematic representation of the trajectory of an agricultural machinery within a work area;
Figures 3A to 3D illustrate schematically how a plough according to an aspect of the present disclosure can acquire thermal images of soil as it is being turned over by a ground engaging tool of the plough; and
Figure 4 schematically illustrates a method according to the present disclosure.

### Detailed Description of the Drawings

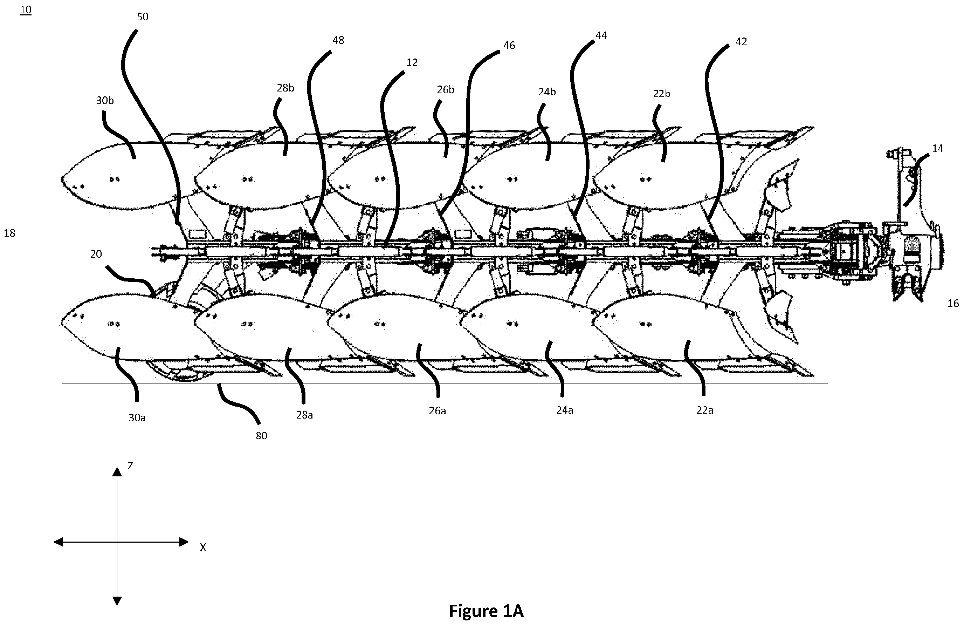

Figures 1A to 1C show various views of an agricultural implement, particularly a plough implement 10. As will be described in more detail below, the plough implement 10 shown in Figures 1A to 1C is a reversible plough.

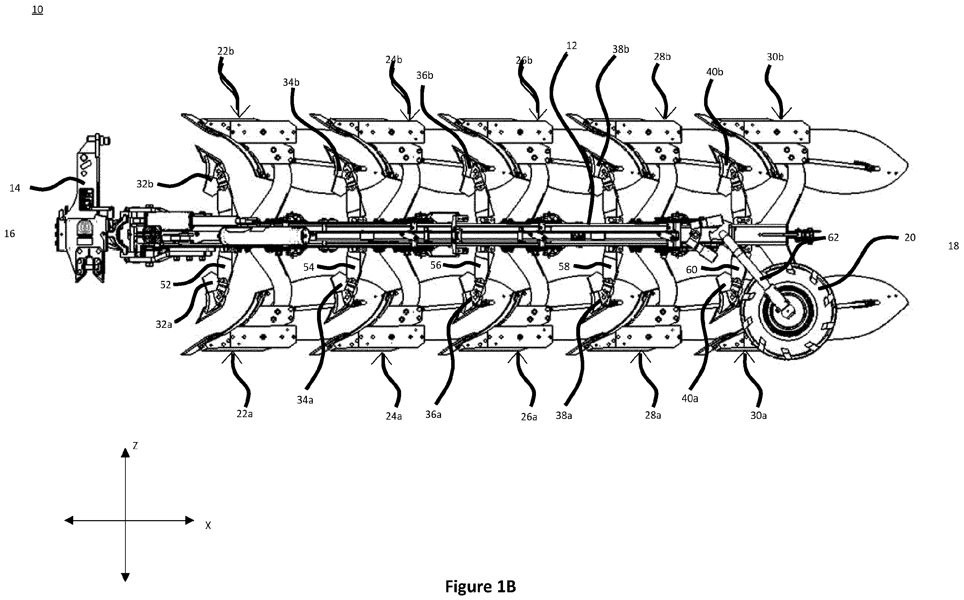

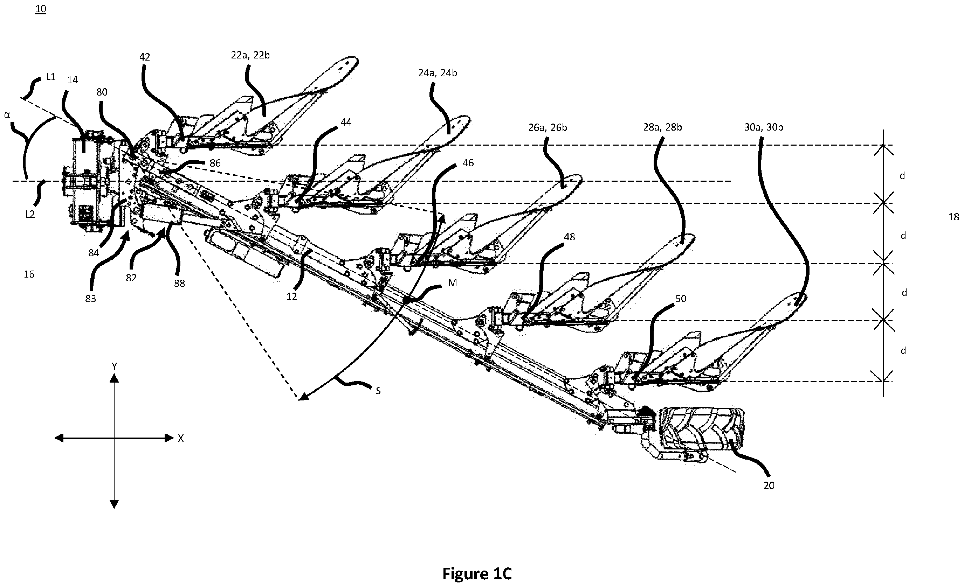

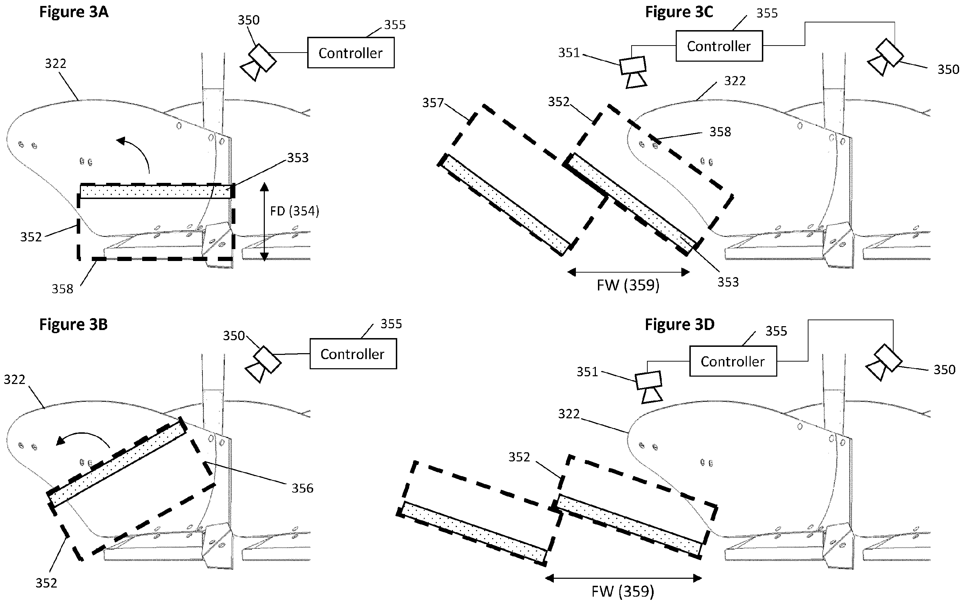

In the following, the term "longitudinal direction" shall refer to direction X shown in Figures 1A to 1C. In normal conditions, the "longitudinal direction" is aligned with a direction of travel of the agricultural plough implement 10. The term "lateral direction" shall refer to direction Y shown in Figures 1C and 3. The lateral direction Y is perpendicular to the "longitudinal direction" X. The term "vertical direction" shall refer to direction Z shown in Figures 1A and 1B. The "vertical direction" Z is perpendicular to the "longitudinal direction" X and the "lateral direction" Y.

The plough implement 10 comprises a main frame 12. The main frame 12 may be a rectangular or round tube extending between a headstock 14 at a front end 16 of the plough towards a plough wheel 20 at a rear end 18 of the plough. The main frame 12 supports a variety of ground-engaging tools. The headstock 14 includes a hitch for connecting the plough implement 10 to an agricultural work vehicle, such that the agricultural work vehicle can propel the plough implement 100 either by towing / pulling it or pushing it. References to a headstock throughout this disclosure can be interpreted broadly as a hitch, which can be present in different forms on various agricultural implements that are propelled (towed or pushed) by an agricultural work vehicle.

In the example of Figures 1A to 1C, the ground engaging tools include plough bodies 22a, 22b, 24a, 24b, 26a, 26b, 28a, 28b, 30a, 30b and plough skimmers 32a, 32b, 34a, 34b, 36a, 36b, 38a, 38b, 40a, 40b. A plurality of first ground engaging tools, i.e. plough bodies 22a, 24a, 26a, 28a, 30a and skimmers 32a, 34a, 36a, 38a, and 40a, are arranged on a first side of the main frame 12. In a first configuration of the main frame 12, illustrated in Figures 1A to 1C, the plurality of first ground engaging tools are arranged below the main frame 12.

A plurality of second ground engaging tools, i.e. plough bodies 22b, 24b, 26b, 28b, 30b and skimmers 32b, 34b, 36b, 38b, and 40b, are arranged on a second side of the main frame 12, opposite to the plurality of first ground engaging tools. In the first configuration of the main frame 12, illustrated in Figures 1A to 1C, the plurality of second ground engaging tools are arranged above the main frame.

Each of the plough bodies 22a, 22b, 24a, 24b, 26a, 26b, 28a, 28b, 30a, 30b is connected to the main frame 12 by means of beams 42, 44, 46, 48, 50. Each of the beams 42, 44, 46, 48, 50 has a substantially Y-shaped structure.

A first beam 42 supports a first pair of plough bodies 22a, 22b. A second beam 44 supports a second pair of plough bodies 24a, 24b. A third beam 46 supports a third pair of plough bodies 26a, 26b. A fourth beam 48 supports a fourth pair of plough bodies 28a, 28b. A fifth beam 50 supports a fifth pair of plough bodies 30a, 30b.

Each of the pairs of plough bodies 22a, 22b, 24a, 24b, 26a, 26b, 28a, 28b, 30a, 30b is designed to create a furrow in the field when the plough is dragged behind or pushed by an agricultural work vehicle such as a tractor. It follows that each run of the illustrated plough implement 10 through a field creates five adjacent furrows.

A first mounting rail 52 supports a first pair of skimmers 32a, 32b. A second mounting rail 54 supports a second pair of skimmers 34a, 34b. A third mounting rail 56 supports a third pair of skimmers 36a, 36b. A fourth mounting rail 58 supports a fourth pair of skimmers 38a, 38b. A fifth mounting rail 60 supports a fifth pair of plough bodies 40a, 40b. The skimmers 32a, 32b, 34a, 34b, 36a, 36b, 38a, 38b, 40a, 40b and/or their respective mounting rails may be adjustable with respect to the main frame 12 to change the distance between the skimmers 32a, 32b, 34a, 34b, 36a, 36b, 38a, 38b, 40a, 40b and the main frame. In one example, the skimmers 32a, 32b, 34a, 34b, 36a, 36b, 38a, 38b, 40a, 40b may be movable up and down towards and away from the main frame 12 to individually adjust the working depth of each of the skimmers. The skimmers 32a, 32b, 34a, 34b, 36a, 36b, 38a, 38b, 40a, 40b may either be manually or automatically adjustable.

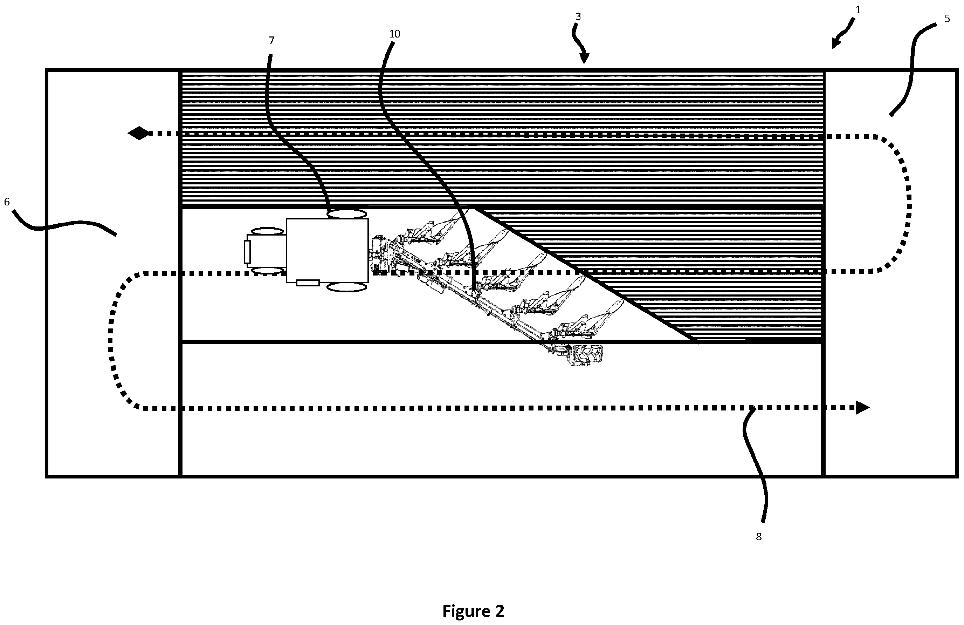

Turning to Figure 2, a typical operation of an agricultural machinery comprising a tractor 7 and a plough implement 10 is described. In use, the plough implement 10 is drawn as an attachment (implement) behind an agricultural towing vehicle (e.g. tractor 7). It will be appreciated that it is equivalently feasible to locate the plough implement 10 in front of or both in front of and behind the tractor 7.

Figure 2 shows a schematic work area 1, e.g. a crop field, which is divided into a main field 3 and headlands 5,6. A tractor 7 draws the plough implement 10 across the main field 3 in generally parallel working rows. The working rows are part of the trajectory 8 of the tractor 7 and typically run in parallel with a long edge of the work area 1. Each working row represents an individual run of the agricultural machinery across the field between headlands 5 and 6. As will be described in more detail below, a five-furrow plough, such as the exemplary plough shown in Figures 1A to 1C creates a total of five furrows per run.

At the end of each run/working row, the tractor 7 and plough implement 10 use the upcoming headland 5 or 6 for turning around, as indicated by trajectory 8. It is known in the art that the soil of the headlands 5, 6 is subject to greater levels of soil compaction as it receives more traffic per unit area than the main field 3. In order not to disturb the soil of the headlands 5, 6 more than necessary, it is known to lift the ground engaging tools, such as the plough bodies and the skimmers, off the ground into a headland or transfer position, just before the plough implement 10 reaches the headlands 5 or 6 respectively. Once the tractor 7 and the corresponding plough implement 10 have turned on the headland 5, 6, the ground engaging tools of the plough implement 10 are, again, lowered towards an operating position to engage the soil of the main field 3.

In the illustration of Figure 2, the plough implement 10 is working on the main field 3 and, therefore, is arranged in the operating position. As the plough implement 10 reaches the border between the headland 5/6 and the main field 3, the plough implement 10 is transferred to a headland/transfer position. It follows that each working row starts with an adjustment of the plough from the transfer position into the operating position and ends with an adjustment of the plough from the operating position into the transfer position.

The plough implement 10 shown in Figures 1A to 1C is of the fully-mounted type. In fully-mounted ploughs, the weight of the plough is carried exclusively by the tractor when the plough is in its transfer position (on the headlands). In other words, the plough is then exclusively supported by the tractor 7 via headstock 14 and may be lifted off the ground with a lift cylinder of a tractor linkage.

During the turning movement on the headlands, the plough implement 10 is also reversed. That is, the main frame 12 is rotated by about 180 degrees with respect to the headstock 14 to move the plough from a first configuration to a second configuration. It will be appreciated that if the operator is ploughing in the furrow, then the main frame 12 may not be rotated by exactly 180 degrees, it is more likely to be 190-200 degrees or 160-170 degrees depending on which direction the main frame 12 turns. If the operator is ploughing on-land, then the main frame 12 may be rotated by an angle that is closer to 180 degrees, perhaps exactly 180 degrees. That is, the main frame 12 is rotated by around 180 degrees with respect to the headstock 14 to move the plough from a first configuration to a second configuration.

In its first configuration shown in Figures 1A to 1C, the plough implement 10 is set up such that the plurality of first ground engaging tools, i.e. plough bodies 22a, 24a, 26a, 28a, and 30a and skimmers 32a, 34a, 36a, 38a, 40a, of each of the pairs are in contact with the soil. This first configuration is shown in Figure 2 and sometimes also referred to as the "left side configuration", since most of the plough bodies are arranged to the left of tractor 7. In its second configuration (not illustrated), the plough implement 10 is set up such that the plurality of second ground engaging tools, i.e. plough bodies 22b, 24b, 26b, 28b, 30b and skimmers 32b, 34b, 36b, 38b, 40b, are in contact with the soil. This second configuration is achieved after rotating the main frame by 180 degrees, such that the majority of plough bodies are then located to the right of the tractor (not shown). The second configuration is, therefore, also sometimes referred to as the "right side configuration".

Tilling the field with the plough implement 10 in this first configuration provides a first furrow created by the first plough body 22a, a second furrow created by the second plough body 24a, a third furrow created by the third plough body 26a, a fourth furrow created by the fourth plough body 28a, and a fifth furrow created by the fifth plough body 30a. A furrow width is determined by the lateral distance d between the plough bodies 22a, 22b, 24a, 24b, 26a, 26b, 28a, 28b, 30a, 30b, as illustrated in Figure 1C.

As the reversible plough implement 10 reaches the end of the first run, the main frame 12 is rotated by 180 degrees (reversed) with respect to the headstock 14. A turning cylinder (not shown), attached to the headstock 14 may be used to rotate (reverse) the plough implement 10. During rotation of the main frame, the first plurality of plough bodies, e.g. 22a, 24a, 26a, 28a, 30a, are transferred to the top of the plough implement 10. At the same time, the second plurality of plough bodies e.g. 22b, 24b, 26b, 28b, 30b, which were not in use in the previous run, is then transferred to the lower end of the plough implement 10 and will be submerged in the soil during the next run. The reversible plough is then in its second configuration (not shown).

Executing a second run of the field with the plough implement 10 in this second configuration provides a first furrow created by the sixth plough body 22b, a second furrow created by the seventh plough body 24b, a third furrow created by the eighth plough body 26b, a fourth furrow created by the ninth plough body 28b, and a fifth furrow created by the tenth plough body 30b.

Reversing the plough implement 10 between consecutive runs has the advantage that the plough bodies 22a, 22b, 24a, 24b, 26a, 26b, 28a, 28b, 30a, 30b that engage the soil always face the same side edge of the main field 3, irrespective of the tractor's orientation.

In both configurations of the plough implement 10 the main frame 12 is supported by an implement wheel 20. The implement wheel 20 is arranged at the back end 18 of the plough implement 10. Since the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b are generally fixed to the main frame via beams 42, 44 46, 48 and 50, there is no possibility of adjusting the working depth of said ground engaging tools without changing the ground clearance of the main frame 12. To this end, the plough 10 shown in Figures 1A to 1C includes an implement wheel 20, which acts as a depth wheel to adjust the ground clearance of the main frame 12. A linkage 62 provided between the implement wheel 20 and the main frame 12 allows the operator to lift or lower the main frame 12 with respect to a ground surface 80. The linkage 62 may be connected to an actuator, e.g. a hydraulic cylinder (not shown), for adjusting the distance between the implement wheel 20 and the main frame, thereby lifting and lowering the main frame. The linkage 62 and the actuator together form a depth adjustment apparatus for the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b. Since the position of the plurality of first and second ground engaging tools is fixed with respect to the main frame 12, any change in the main frame's ground clearance will also affect the working depth of the plurality of first and second ground engaging tools. In particular, if the main frame 12 is lowered by shortening the linkage 62 between implement wheel 20 and the main frame 12, then the working depth of the plurality of first ground engaging tools shown in Figures 1A to 1C is increased, i.e. the plurality of first ground engaging tools are lowered further into/towards the soil. If, on the other hand, the main frame 12 is lifted, by extending the linkage 62 between implement wheel 20 and the main frame 12, then the working depth of the plurality of first ground engaging tools is decreased, i.e. the plurality of first ground engagement tools are raised.

Referring back to Figure 1C, it will be appreciated that the distance d between the plough bodies 22a/22b, 24a/24b, 26a/26b, 28a/28b, and 30a/30b is adjustable. In the embodiment of the plough implement 10 shown in Figures 1A to 1C, the lateral distance d is adjustable by pivoting the main frame 12 in a horizontal plane, such as in the plane shown in Figure 1C. In other words, the main frame 12 is connected to the headstock 14 via a pivot 80. The main frame 12 may rotate about the pivot 80 with respect to the headstock 14 and thus also with respect to an agricultural work vehicle (not shown) that is connected to the headstock 14.

In a normal operation, a longitudinal axis L1 of the main frame 12 is arranged at an angle α with respect to a longitudinal axis L2 of a corresponding agricultural work vehicle. It will be appreciated that the angle α between the longitudinal axis L1 of the main frame 12 and the longitudinal axis L2 of the agricultural work vehicle may be changed by pivoting the main frame about the pivot 80. A plough / furrow width adjustment mechanism 82 comprises the pivot 80 and a width adjustment actuator 88. The width adjustment actuator 88 in this embodiment is a hydraulic cylinder. By retracting the width adjustment actuator 88, a front part 86 of the main frame 12 will be drawn closer towards the headstock 14, thereby increasing the angle α between the longitudinal axis L1 of the main frame 12 and the longitudinal axis L2 of the agricultural work vehicle. As the angle α between the longitudinal axes L1, L2 is increased, so is the lateral distance d between the neighbouring plough bodies 22a to 30b. Similarly, if the actuator 88 is extended, the main frame 12 is pivoted counter-clockwise in Figure 1C about the pivot 80, thereby decreasing the angle α between the longitudinal axis L1 of the main frame 12 and the longitudinal axis L2 of the agricultural work vehicle. As the angle α between the longitudinal axis L1 and L2 is decreased, the lateral distance d between the neighbouring plough bodies 22a through to 30b decreases.

Although this is not specifically represented in Figure 1C, it will also be appreciated that as the angle α between the axes L1, L2 is increased, a lateral arrangement of the main frame and the plough bodies 22a to 30b with respect to the agricultural work vehicle (not shown) changes. This is because, as the angle α is manipulated, the centre M of the plough implement is moved along circular segment S. Accordingly, as the angle α is increased, the centre M of the plough implement 10 is moved towards the bottom of Figure 1C. Similarly, if the angle α is decreased, the centre M of the plough implement 10 moves towards the top end of Figure 1C.

A lateral adjustment of the plough bodies with respect to the agricultural work vehicle may also be possible without changing the angle α between the main frame 12 and the agricultural work vehicle. In the embodiment of the plough implement 10 shown in Figures 1A to 1C, the plough implement 10 includes a lateral frame adjustment mechanism 83, which is implemented as a sliding mechanism that allows for lateral movement of the main frame 12 with respect to the headstock 14 and, therefore, with respect to the agricultural work vehicle. Such lateral movement of the main frame 12 adjusts the width of the first furrow, which is created by the first plough body 22a, 22b at the front of the plough.

Figures 3A to 3D illustrate schematically how a plough (which may also be referred to as a plough implement herein) according to an aspect of the present disclosure can acquire thermal images of soil as it is being turned over by a ground engaging tool of the plough. In the example of Figures 3A to 3D the ground engaging tool is a plough body 322, although it will be appreciated that in other examples the ground engaging tool can be a skimmer (as discussed above).

Figures 3A to 3D also show schematically that the plough includes a thermal camera 350 that is configured to acquire the thermal images of soil as it is being turned over by the ground engaging tool (in this example turned over by the plough body 322).

Figure 3A shows schematically a layer of soil 352 that is just about to come into contact with the plough body 322 as the plough body 322 is moving through the agricultural field. Figure 3B shows the same layer of soil 352 at a later point in time, at which time it is partway through being turned over by the plough body 352. The layer of soil 352 has been identified such that it has a thickness that corresponds to the working depth of the plough body 322. A top portion of the layer of the soil 352 is shown with a dotted fill to schematically represent plant residue 353, such as weeds or a remainder of crop that lies in the field after it has been harvested. As discussed herein, one of the purposes of ploughing can be to bury residue 353 to prepare the field for a subsequent agricultural operation such as harrowing or seeding.

The plough also includes a controller 355 that is configured to set one or more operational characteristics of the plough based on the acquired thermal images. Examples of various operational characteristics that can be set are discussed in more detail below.

In one example, the controller 355 can determine a furrow depth based on the acquired images. The furrow depth is identified in Figure 3A with reference 354; it represents the thickness of the layer of soil 352 that is removed from the ground by the plough body 322 and is turned over. Therefore, the furrow depth 354 represents the depth of the furrow that is created by the plough body 322. The controller 355 can then set one or more operational characteristics of the plough based on the determined furrow depth 354.

The controller 355 can determine the furrow depth 354 by processing one or more temperature values that are represented by the thermal image. In one example, the controller 355 can determine a temperature differential across the thickness of the layer of soil 352 as it is being turned over by the plough body. As shown in Figure 3B, a side surface 356 of the layer 352 that is being turned over is visible to the thermal camera 350. The controller 355 can thus process an image of the side surface 356 that is acquired by the thermal camera 355 to determine the temperature differential across the thickness of the layer of soil 352. In one example, the controller 355 can apply an equation to the determined temperature differential to calculate the furrow depth. In an alternative example, the controller 355 can use a look-up table (LUT) or database to determine the furrow depth for a determined temperature differential.

In a further example, the controller can also use a soil surface temperature, along with the temperature differential, to determine the furrow depth. For instance, the relationship between temperature differential and furrow depth may be affected by the soil surface temperature in such a way that can be accounted for in the equation or by using a three-dimensional look-up table (or a plurality of two-dimensional look-up tables). The soil surface temperature can be determined from an acquired thermal image of the soil, or by any other sensor that is known in the art.

In a yet further example, the controller 355 can receive environmental-data as an additional input. The environmental-data is indicative of the environmental conditions in which the plough is operating, and examples of different types of environmental-data will be provided below. The controller can determine the furrow depth 354 based on the acquired images and also the environmental-data. For instance, the controller 355 can apply an equation or look-up table to any relevant aspect of temperature information that can be extracted from the acquired thermal images (examples of which are provided above and below) and also to the environmental-data in order to determine the furrow depth.

Figure 3B has been used to illustrate how the controller 355 can determine the temperature of the exposed side surface 356 of the layer of soil 352 as it is being turned over by the plough body 322. Figures 3C and 3D will be used to describe how the controller 355 can determine the temperature of an exposed bottom surface 358 of the layer of soil 352 as it is being turned over by the plough body 322. As will be discussed below, the exposed bottom surface 358 is a surface that was at the bottom of the layer or soil 352 before it was turned over.

Figure 3C shows that the layer of soil 352 that is shown in Figures 3A and 3B has been completely turned over and is resting upon another layer of soil 357. The other layer of soil 357 may have been turned over by a plough body that is in front of, and laterally offset from, the plough body 322 that is shown in Figure 3C. Alternatively, the other layer of soil 357 may have been turned over by an end plough body during an earlier run of the plough along a parallel, but different, working row. Figure 3C shows an alternative or additional thermal camera 351 that can acquire a thermal image of the bottom surface 358 of the layer of soil 352. It will be appreciated that in another example a single thermal camera can be used that has a field of view that encompasses the fields of view of the two separate thermal cameras 350, 351 that are shown in Figure 3C. In Figure 3C, the bottom surface 358 is the deepest part of the layer of soil 352 before it was turned over. Therefore, it can be considered as a former bottom surface, or a former deepest surface of the layer of soil 352. The temperature of the bottom surface 358 of the layer of soil 352 can be indicative of the furrow depth. Therefore, the controller 355 can determine the furrow depth based on the temperature of the bottom surface 358 of the layer of soil 352.

In a similar way to that described above for the example in which the controller 355 processes a differential temperature, the controller 355 in this example can determine the furrow depth based on the temperature of the bottom surface 358: using an algorithm or look-up table; in combination with environmental-data; and / or the soil surface temperature. The controller 355 can determine the temperature of the bottom surface 358 by taking this information from a region of the acquired images that is known to correspond with the bottom surface 358 (for instance as it is being laid down). Such a region may be predetermined in that it can be pre-calculated based on the geometry of the plough and the field of view of the thermal camera 351.

In a yet further example, the controller 355 can apply a machine learning algorithm to the acquired thermal images in order to determine the furrow depth. As is known in the art, such machine learning algorithms can be trained using suitable thermal images as training data and a known furrow depth as ground truth data. Such machine learning algorithms can also be trained using environmental-data as inputs such that the subsequent classification of the furrow depth can also be based on environmental-data.

Once the furrow depth has been determined, any operational parameter of the plough can then be set by the controller 355. For instance, if the determined furrow depth 354 does not match an intended working depth of the plough body 322, then the working depth can be adjusted such that the determined furrow depth 354 will be closer to its intended value.

As indicated above, the layer of soil 352 that is being turned over includes a layer of plant residue 353 at its top surface (i.e., the uppermost surface of the layer of soil 352 before it was turned over - the surface that is opposite the bottom surface 358). An objective of the ploughing operation may be to achieve as little plant residue coverage as possible after ploughing such that the agricultural field is clear and ready for a subsequent agricultural operation (e.g., seeding).

In some examples, the controller 355 can determine a residue coverage that is achieved by the ploughing operation based on the acquired thermal images. The controller 355 can then set one or more operational characteristics of the plough based on the determined residue coverage. This can be in order to reduce residue coverage if it is desirable to have as little residue coverage as possible. In another example, it can be beneficial to have a certain amount of residue coverage remaining on the field after ploughing. In which case, the controller 355 can set the one or more operational characteristics of the plough such that the residue coverage that results from the ploughing operation is intended to have a (non-zero) target amount. It can be beneficial to have residues in the surface layer when the main purpose of ploughing is not to have a fresh start or bury weeds, in which case the residue on the surface can provide a stabilizer for the soil to prevent erosion, especially for dry and light soils.

In one example, the controller 355 can determine the residue coverage that is achieved by the ploughing operation by determining a proportion of an acquired thermal image of the layer of soil 352 as it is being laid down (as shown in Figure 3C) that has a temperature that is above a residue-threshold. The plant residue 353 can be expected to have the highest temperature of the layer of soil 352, and therefore relatively high temperature regions of the acquired thermal image can be identified as exposed regions of plant residue 353. In one example the residue-threshold can have a predetermined value, for instance one that is set by an operator before starting the ploughing operation. In another example, the controller 355 can automatically set the residue-threshold. For instance, the controller 355 can set the residue-threshold based on one or more of: environmental-data such as air temperature and / or soil temperature; a temperature represented by an acquired thermal image of the layer of soil 352 before it is turned over-such as the maximum temperature, the minimum temperature an average temperature, and / or a temperature of the upper surface of the layer of soil 352. In this way, the controller can correlate the temperature values (especially the relatively high ones) that are represented by a thermal image of the layer of soil 352 as it is being laid down with the amount of residue coverage that remains following the ploughing operation.

In a further example, the plough can include a second thermal camera that acquires images of the soil before it is turned over by the ground engaging tool of the plough. Such a second thermal camera can acquire second thermal images in order to determine the surface temperature before it is touched by the plough. In this way, the controller 355 can use the surface temperature determined from the acquired second thermal images to set the residue-threshold, thereby using a real measurement as a changing baseline. This can be especially useful where the surface temperature varies from location to location within a field (e.g., being in the shadow of a tree, in full sunshine, etc.). The second thermal camera can be implemented as a separate piece of hardware to that of the thermal camera. Alternatively, the acquired second thermal images may be obtained by the same thermal camera that acquires the (first) thermal images, whereby the first and second thermal images represent different portions of the field of view from the same physical camera.

Once the residue coverage has been determined, the controller 355 can set one or more operational characteristics of the plough based on the determined residue coverage. For instance, Figure 3D illustrates an example where the furrow width 359 of the plough has been increased when compared with Figure 3C. In Figure 3D it can be seen that the layer of soil 352 has been laid down such that it is flatter than is the case in Figure 3C. In some cases, increasing the furrow width 359 (and therefore laying the layers of soil 352 down flatter) can reduce the residue coverage that is achieved by the ploughing operation because there is less plant residue 353 near the surface of the field after ploughing. In another example, increasing the working depth of the ploughing operation can reduce the residue coverage.

More generally, any of the examples of a controller that are described herein can set one or more of the following operational characteristics of the plough:
- a working depth of the ground engaging tool (which may be a plough body and / or a skimmer). In some examples the working depth of all of the ground engaging tools may be set collectively, for instance by controlling an adjustable linkage to change the distance between the depth wheel and the main frame, as discussed above. In other examples, the working depth of one or more of the ground engaging tools may be adjustable independently or as a subset of the ground engaging tools. Therefore, the controller can set different working depths for different ground engaging tools. As a further still example, the angle of the plough frame with respect to the ground can be set in order to set the working depth of the plough such that ground engaging tools at one longitudinal end of the plough have a greater working depth than ground engaging tools at the other longitudinal end of the plough. That is, the plough frame can be angled up or down at the front in order to set a working depth profile of the ground engaging tools.
- a furrow width. As discussed above the furrow width can be set by changing an angle of the frame with respect to the agricultural work vehicle.
- a first furrow width. As discussed above the first furrow width can be set by shifting the frame of the plough implement with respect to the headstock, thereby adjusting the lateral position of the first plough body with respect to the adjacent furrow from the adjacent working row.
- a speed of the plough. This can be set by the controller providing a speed-control-signal to a tractor that is providing propulsion to the plough in order to adjust its speed. This example can be especially useful when the plough / tractor is being driven autonomously. If the tractor is not being controlled autonomously, then the controller can provide a speed-target-signal that causes a target speed to be displayed to the operator of the tractor such that they can manually set the speed of the tractor (and therefore the plough) to the target speed.
- an angle of the ground engaging tool (i.e. the plough body and / or the skimmer). Although it is not described in detail above, it is known in the art to be able to adjust an angle of attack of a ground engaging tool of the plough. In the same way as described above for setting a working depth, the angle of all of the ground engaging tools can be set collectively to the same value, or the angles can be individually set for selective ones or groups of ground engaging tools.

It will be appreciated that any of the operational parameters that are described herein can be set based on the acquired thermal images (either directly or indirectly following some intermediate processing) to improve the quality of a ploughing operation in any way that is relevant to a particular set of circumstances that can either be automatically determined or received from a user as user-input.

In some examples, the controller 355 can receive a subsequent-operation-signal that represents information about a subsequent operation that is to be performed on the soil / in the field. The subsequent-operation-signal can represent one or more of the following: a seeding operation, and optionally the type of seeds that will be sown; a harrowing operation; a period of time until the subsequent operation; the time of year that the subsequent operation will be performed. The controller 355 can then set the one or more operational characteristics of the plough also based on the received subsequent-operation-signal.

For example, if the subsequent-operation-signal represents a seeding operation then the operational characteristics of the ploughing operation can be set such that they are suitable for the upcoming seeding operation. This can involve either burying the plant residue 353 deeply or shallowly, for instance.

If the subsequent-operation-signal represents a harrowing operation, then it may be desirable for the ploughed field to have a wavy profile so that the harrow can cut off the peaks of the soil and put them into the troughs. Therefore, the operational characteristics of the ploughing operation can be set in order to provide a desired physical profile of the soil after the ploughing operation such that it is suitable for a subsequent harrowing operation. For example, increasing the furrow width can result in a flatter ploughed field.

If the subsequent-operation-signal represents a period of time until the subsequent operation and / or the time of year that the subsequent operation will be performed, then the operational characteristics of the ploughing operation can be set accordingly. For example, if the ploughing operation is being performed in autumn, then it may be desirable to bury the plant residue 353 relatively deeply such that a relatively low soil surface temperature remains following the ploughing operation. This can be determined by the alternative / additional thermal camera 351 that is shown in Figures 3C and 3D. In another example, if a seeding operation is imminent then it may be desirable to bury the plant residue 353 relatively shallowly such that a relatively high soil surface temperature remains following the ploughing operation.

More generally, the controller 355 can set the one or more operational characteristics of the plough also based on the received subsequent-operation-signal in combination with information that is derived from the acquired thermal images in order to achieve a desired surface temperature of the soil after ploughing. For example, if it is a cold day and the acquired thermal images indicate that the surface of the soil (before it is ploughed) is colder than the bottom surface 358, then the operational characteristics of the ploughing operation (such as the working depth of the plough bodies) can be set to achieve a desired soil surface temperature after ploughing. As another example, if ploughing is being performed in the evening after the sun has heated the surface of the soil and also layers below the surface of the soil during the day, but the acquired thermal images indicate that the surface of the soil (before it is ploughed) has started to cool down, then the controller can set the operational characteristics of the ploughing operation to achieve a desired soil surface temperature after ploughing.

In further examples, the controller 350 can receive environmental-data that is indicative of the environmental conditions in which the plough is operating. Such environmental-data can be indicative one or more of: air humidity; air temperature; soil temperature; soil type; soil compaction; and time of year, and can be provided by any appropriate sensors that are known in the art. The controller 350 can then set the one or more operational characteristics of the plough based on the received environmental-data (in addition to the acquired thermal images) in order to improve the ploughing operation for the identified environmental conditions.

In some examples the controller 350 can use the subsequent-operation-signal and / or the environmental-data to set the operational characteristics by: selecting one of a plurality of different LUTs that is used to look-up the operational characteristics using information derived from the acquired thermal images; or by including it as an input when applying an equation to information derived from the acquired thermal images.

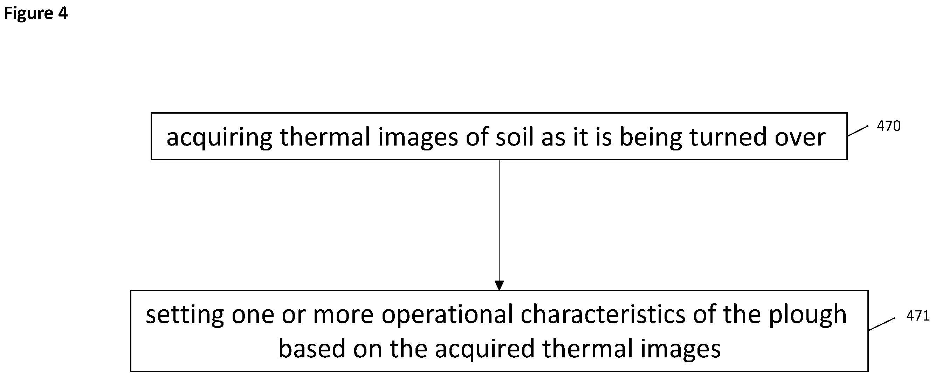

Figure 4 schematically illustrates a computer-implemented method of controlling a plough according to the present disclosure. The plough can include any of the features that are described above. At step 470, the method involves acquiring thermal images of soil as it is being turned over by a ground engaging tool of the plough. Such thermal images can be acquired by one or more thermal cameras, as discussed above. At step 471, the method involves setting one or more operational characteristics of the plough based on the acquired thermal images. Numerous examples of suitable operational characteristics are provided above. Also, it will be appreciated that the method can set the one or more operational characteristics either directly or indirectly based on the acquired thermal images.

Preferences and options for a given aspect, feature or parameter of the invention should, unless the context indicates otherwise, be regarded as having been disclosed in combination with any and all preferences and options for all other aspects, features and parameters of the disclosure.

## Claims

1. A plough comprising:
a ground engaging tool;
a thermal camera that is configured to acquire thermal images of soil as it is being turned over by the ground engaging tool; and
a controller that is configured to set one or more operational characteristics of the plough based on the acquired thermal images.

2. The plough of claim 1, wherein the controller is configured to:
determine a furrow depth based on the acquired thermal images; and
set the one or more operational characteristics of the plough based on the determined furrow depth.

3. The plough of claim 2, wherein the controller is configured to apply a machine learning algorithm to the acquired thermal images in order to determine the furrow depth.

4. The plough of any preceding claim, wherein the controller is configured to:
determine a residue coverage that is achieved by the ploughing operation based on the acquired thermal images; and
set the one or more operational characteristics of the plough based on the determined residue coverage.

5. The plough of claim 1, wherein the controller is configured to:
determine a temperature differential across the thickness of a layer of soil as it is being turned over by the ground engaging tool from the acquired thermal images; and
set the one or more operational characteristics of the plough based on the determined temperature differential.

6. The plough of claim 5, wherein the controller is configured to:
determine a furrow depth based on the determined temperature differential; and
set one or more operational characteristics of the plough based on the determined furrow depth.

7. The plough of claim 6, wherein the controller is configured to determine the furrow depth based on the determined temperature differential and also a temperature of the soil surface.

8. The plough of claim 1, wherein the controller is configured to:
determine a temperature of an exposed surface of a layer of soil as it is being turned over by the ground engaging tool; and
set the one or more operational characteristics of the plough based on the determined temperature of the exposed surface.

9. The plough of claim 8, wherein the controller is configured to:
determine a furrow depth based on the determined temperature of the exposed surface; and
set one or more operational characteristics of the plough based on the determined furrow depth.

10. The plough of any preceding claim, wherein the controller is configured to set one or more of the following operational characteristics of the plough:
a working depth of the ground engaging tool;
a furrow width;
a first furrow width;
a speed of the plough; and
an angle of the ground engaging tool.

11. The plough of any preceding claim, wherein the controller is configured to:
receive a subsequent-operation-signal that represents information about a subsequent operation that is to be performed on the soil; and
set the one or more operational characteristics of the plough also based on the received subsequent-operation-signal.

12. The plough of claim 11, wherein the subsequent-operation-signal represents one or more of the following:
a seeding operation, and optionally the type of seeds that will be sown;
a harrowing operation;
a period of time until the subsequent operation; and
the time of year that the subsequent operation will be performed.

13. The plough of any preceding claim, wherein the controller is configured to:
receive environmental-data that is indicative of the environmental conditions in which the plough is operating; and
set the one or more operational characteristics of the plough also based on the received environmental-data.

14. The plough of claim 13, wherein the environmental-data is indicative one or more of:
air humidity;
air temperature;
soil temperature;
soil type;
soil compaction; and
time of year.

15. A computer-implemented method of controlling a plough, the method comprising:
acquiring thermal images of soil as it is being turned over by a ground engaging tool of the plough; and
setting one or more operational characteristics of the plough based on the acquired thermal images.
